# EUROPEAN PATENT APPLICATION

(11) **EP 2 421 225 A1**
(43) Date of publication of application: **22.02.2012**
(21) Application number: 10305904.4
(22) Date of filing: 20.08.2010
(51) Int. Cl.: H04L 29/08, H04L 29/12, H04L 12/56

(54) **Processing method, proxy processing agent, system and method for filling a routing table of a DHT client node, router and dht client node**

(71) Applicant: Alcatel Lucent, 75007 Paris (FR)
(72) Inventor: Van Ackere, Michel, 9100, Sint-Niklaas (BE); Migdisoglu, Murat, 2018, Antwerp (BE); Sharma, Pranav, 2018, Antwerp (BE)
(74) Representative: D'Halleweyn, Nele Veerle Trees Gertrudis

(57) **Abstract**

Processing method for replying to a distributed hash table (DHT) message from a DHT client in order to allow the DHT client to fill his DHT routing table, comprising the following steps performed at a proxy processing agent having a plurality of nodes:
receiving from the DHT client a DHT request message;
generating at least one node identifier and associating each node identifier with an IP address and a port number, each IP address/port number combination corresponding with a node of said plurality of nodes;
sending a DHT response message containing said at least one node identifier and associated IP address and port to the DHT client;
storing in connection with said DHT client the at least one generated node identifier and associated IP address and port.

## Description

### FIELD OF THE INVENTION

The invention generally relates to the field of systems and methods related to the filling of a routing table of a distributed hash table (DHT) client node, and more particularly to a processing method, a proxy processing agent, a system and method for filling a routing table, a router and a DHT client node.

### BACKGROUND

Distributed Hash Table (DHT) favours communication between strongly distributed nodes. This often leads to expensive communication between nodes, even though nodes that allow much cheaper communication may be available while not being explicitly known to the actually involved nodes.

A DHT node currently builds up its view on the available foreign nodes in the DHT network from nodes/peers that it finds in DHT response messages that it receives on DHT request messages (e.g. a DHT find-node or get-peers request message) that it sends to foreign nodes, and/or nodes that it finds in DHT request messages that it receives from foreign nodes, and/or peers that it finds in BitTorrent response messages that it receives on BitTorrent announce request messages that it sends to BitTorrent trackers, etc. The resulting view is semi-permanently stored in the DHT Routing Table of the DHT node. Once a foreign node is entered in the Routing Table of a DHT node, it typically remains there at least until the foreign node does not respond to DHT request messages any longer or until the DHT node is switched down, at which point it may clean its DHT Routing Table. As a DHT node exclusively uses the foreign nodes in its DHT Routing Table to further communicate within the DHT network, there is no control on what nodes will actually communicate in the DHT network, leading to a more expensive communication than needed using e.g. "far away" nodes, requiring transatlantic links and or multiple IP-hops where "nearby" nodes are available.

### SUMMARY OF THE INVENTION

The object of the invention is to provide a processing method, a proxy processing agent, a system and method for filling a routing table, a router and a DHT client node leading to an improved communication between DHT nodes, in particular for BitTorrent applications.

According to an embodiment there is provided a processing method for replying to a distributed hash table (DHT) message from a DHT client in order to allow the DHT client to fill his DHT routing table. The method comprises a number of steps performed at a proxy processing agent having a plurality of predefined nodes, each node having an IP address and port number. In a first step one of those nodes receives from the DHT client a DHT request message. Next the proxy processing agent generates at least one node identifier and associates each node identifier with an IP address and a port number. Each IP address/port number combination corresponds with a node of the proxy processing agent. Next a DHT response message is sent to the DHT client containing said at least one node identifier and associated IP address and port. Typically the proxy processing agent will maintain a database storing in connection with each DHT client the generated node identifiers and associated IP addresses and ports.

Such a method allows for grabbing control of the routing table in a DHT client node. Embodiments of such a method can e.g. ensure that a DHT node residing in an ISP network fills its Routing Table with predefined nodes with which the communication cost is known to be low.

According to a preferred embodiment the DHT request message is a message for which the associated DHT response message includes at least one node. The DHT request message can e.g. be any one of the following: a DHT find-node request message, a DHT ping request message, a DHT get-peers request message, a DHT announce request message, etc.

According to an embodiment of the processing method of the invention, the first message received from a particular DHT client will typically be a first DHT request message addressed to a bootstrap server and deflected by a router to the proxy processing agent. The generating step then typically consists in generating a first group, typically eight, of first node identifiers for filling a first bucket of a node space. According to an embodiment of the processing method of the invention, a further DHT request message received from the same DHT client will be addressed to a node with an address/port associated with first node identifiers of said first group. The generating step then consists in generating a further group of further node identifiers for filling a further bucket. It will be understood that further DHT request messages may be received from the same DHT client, typically to keep the routing table of that DHT client sufficiently filled.

According to a preferred embodiment, for each received DHT find-node request message a plurality of node identifiers, typically eight node identifiers are generated. This embodiment is preferred for a node space with a size of 2¹⁶⁰ where buckets are considered to be full when they contain eight node identifiers.

According to a preferred embodiment the at least one node identifier is generated according to a predetermined pattern taking into account the node identifier of the DHT client node. Preferably, for every received DHT request message a plurality of node identifiers (e.g. eight node identifiers) are generated at the proxy processing agent. Further preferably, the pattern is such that every node identifier of said plurality of generated node identifiers is in the same bucket and that the node identifier of the DHT client does not reside in said bucket. If e.g. the routing table uses a node space having a size of 2¹⁶⁰, the pattern may consist in splitting the node space in two buckets, filling the bucket not containing the DHT identifier with a predefined number of, typically eight, generated node identifiers, and repeating said splitting and filling step for the other buckets until the bucket size is reduced to a predefined number, typically eight, and fill said last bucket with the last generated node identifiers.

According to a possible embodiment the method further comprises receiving at a node of said plurality of nodes of the proxy processing agent a further DHT request message (e.g. a DHT ping or repeated find-node request message) from the DHT client. In reply to this DHT request message the stored node identifier associated with said node is looked up for said DHT client and a DHT response message containing said looked up stored node identifier is sent to the DHT client.

The invention further relates to a proxy processing agent for replying to a distributed hash table (DHT) message from a DHT client in order to allow the DHT client to fill his DHT routing table. The agent comprises a plurality of nodes capable of receiving from the DHT client a DHT request message; a processing means for generating at least one node identifier and for associating with each node identifier an IP address and a port number; means for composing and sending in reply to said DHT request message a DHT response message to the DHT client, said DHT response message containing said at least one node identifier and associated IP address and port; and storage means for storing in connection with said DHT client the at least one generated node identifier and associated IP address and port.

According to a preferred embodiment the processing means are adapted to generate a group of node identifiers according to a predetermined pattern taking into account the node identifier of the DHT client. For possible patterns reference is made to the method set out above and to the examples given in the figure description below.

Further the invention relates to a system for filling a routing table of a distributed hash table (DHT) client node in a DHT infrastructure comprising a DHT bootstrap server. The system comprises a proxy processing agent with a plurality of proxy nodes; and a plurality of routers adapted to deflect a packet addressed to the bootstrap server towards said proxy processing agent. In that way the proxy processing agent will be able to reply to a DHT request message from a DHT client which is address to a bootstrap server. Hence the returned nodes can be chosen between the plurality of nodes of the proxy processing agent, introducing a certain degree of centralization in the otherwise decentralized DHT infrastructure.

The invention also relates to such a router for use in a network of a DHT client node, wherein the router is adapted to deflect a packet addressed to the DHT bootstrap server towards a first node of said plurality of proxy nodes of said proxy processing agent. Preferably the router contains a policy rule indicating that a packet directed to a particular IP address/UDP port associated with the DHT bootstrap server should be routed instead to a first IP address/UDP port associated with the first node of said plurality of proxy nodes.

The invention further relates to a method for filling a routing table of a distributed hash table (DHT) client node in a DHT infrastructure, wherein the following steps are performed at the DHT client node:
- sending through a router of said at least one router a DHT request message addressed to a bootstrap server;
- receiving in reply to said DHT request message from said proxy processing agent a DHT response message containing a group of nodes comprising for each node a node identifier and associated IP address and port, said group being created and managed at the proxy processing agent, preferably according to a predetermined pattern;
- storing said group of node identifiers and associated IP addresses and ports in the routing table.

According to a preferred embodiment the method further comprising sending a further DHT request message to at least one node of said group and receiving from said at least one node at least one further group of nodes comprising for each node a node identifier and associated IP address and port. This further group was created and managed at the proxy processing agent, preferably according to a predetermined pattern as explained above. Upon receipt at the client node, the further group of node identifiers and associated IP addresses and ports is stored in its routing table. Typically the sending and receiving step will be repeated for a number of nodes of each further group of nodes until the routing table is sufficiently full.

According to another aspect of the invention there is provided a DHT client node having storage means storing a routing table, wherein said routing table contains a group of node identifiers obtained according to any of the above disclosed methods.

According to another aspect of the invention there is provided a computer program for generating for every received DHT request message a plurality of node identifiers using a pattern which is such that every node identifier of said plurality of generated node identifiers is in the same bucket and that the node identifier of the DHT client does not reside in said bucket. According to yet another aspect there is provided a computer program product for storing such a computer program.

According to a preferred aspect of the invention a node of the proxy processing agent, also called proxy node, is a predefined node of an ISP network characterized by a node identification number, an IP-address and a UDP-port with which it can be reached. The DHT client and routers disclosed above are then located in the same ISP network. According to an aspect of the invention there is introduced a certain degree of centralization for the DHT request messages that a DHT node launches via grabbing main control over the Routing Table of the DHT node.

Preferably, the node identifier of a predefined proxy node is generated in such a way that a set of proxy nodes guarantees sufficient filling of the routing table of any DHT client node in the ISP network.

### BRIEF DESCRIPTION OF THE FIGURES

The accompanying drawings are used to illustrate presently preferred non-limiting exemplary embodiments of the present invention. The above and other advantages, features and objects of the invention will become more apparent, and the invention will be better understood from the following detailed description when read in conjunction with the accompanying drawings, in which:
Figure 1A illustrates a method of the prior art for filling a routing table of a DHT node;
Figure 1B illustrates a preferred embodiment of the method and system of the invention;
Figure 2 is a scheme illustrating the messages exchanged between a DHT client X and a proxy nodes processing system as well as the steps performed by the DHT client X en the proxy nodes processing system in-between messages in an embodiment of the invention;
Figure 3 illustrates an example of a database kept in an embodiment of a proxy node processing system of the invention; and
Figure 4 illustrates a second embodiment of the system of the invention.

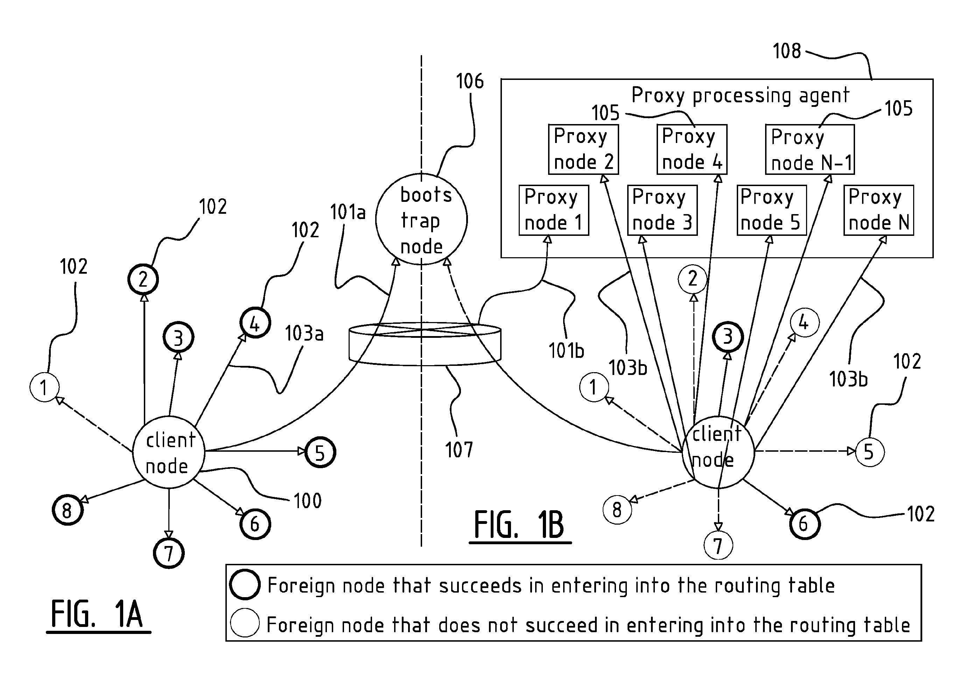

According to the prior art, when a DHT client 100 wants to join the DHT network for the first time, it needs to go through a bootstrap process, see figure 1A. The DHT client 100 will first send a DHT find-node request message 101a to a (in the BitTorrent client hard coded) bootstrap server 106 to obtain initial configuration information. In the present example the DHT client receives the details of eight foreign nodes 102 (nodes 2-9). The term "foreign" refers to nodes outside the ISP network (not shown) of the client node 100. Note that according to other examples of the prior art one of those nodes 102 might be located in the ISP network of the client, but this will typically not happen very often. The details of the nodes 102 typically comprise a node ID, an IP address and UDP port. The DHT client 100 will then fill his routing table with the received details of those foreign nodes 102 and send further DHT request messages 103a to those nodes 102 in order to obtain the details of further nodes 102 to further fill its routing table.

An embodiment of the system and method of the invention is illustrated in figure 1B. When a DHT client 100 wants to join the DHT network for the first time it needs to go through a bootstrap process: the DHT client 100 first sends a DHT find-node request message 101b to a (in the BitTorrent client hard coded) bootstrap server 106 to obtain initial configuration information. However, according to an embodiment of the invention, this DHT find-node request message 101b is deflected at a router 107 towards a first "artificially created" proxy node, here proxy node 1 of a proxy processing agent 108 within the ISP domain of the router 107. This first proxy node has a unique preconfigured IP-address | UDP-port combination IP_1|p_1. To obtain this deflection, the router is adapted to route an incoming packet addressed to the IP-address|UDP-port combination of the bootstrap node 106 to the IP-address|UDP-port combination IP_1|p_1.

The proxy processing agent 108 is typically implemented as a set of server machines capable of fulfilling a number of proxy node activities. More in particular the proxy processing agent 108 is adapted to receive a DHT message from the DHT client. This can be an initial DHT find-node request message 101b deflected by the router 107 or a further DHT request message 103b, see further. In reply to such a message the proxy processing agent 108 generates a number of node identifiers, typically eight. This generating is preferably done according to a predetermined pattern, taking into account the node identifier of the client node 100 sending the DHT request message and the already generated node identifiers for that client, see further. Each node identifier represents a proxy node 105. Further the agent is capable of associating with each node identifier an IP address and a port number, and of sending a DHT response message containing the generated node identifiers and associated IP addresses and ports to the DHT client. Also, the proxy processing agent 108 is provided with a storage means for storing for each client 100 the generated number of node identifiers and associated IP addresses and ports.

In the example of figure 1B, a first proxy node 1 receiving the initial DHT find-node request message 101b returns eight proxy nodes Proxy node2-Proxy node9. Those eight proxy nodes 105 have node identifiers generated according to a predetermined pattern and associated preconfigured IP-address|UDP-port combinations IP_x|p_y. x may be 1 for as long as 2048<y<65636; for larger number of combinations, x may be 2, 3, etc. Next the DHT node 100 will launch further successive DHT find-node request messages 103b to those newly returned proxy nodes 105, which on their turn return other proxy nodes. Those other proxy nodes will also have node identifiers generated according to a predetermined pattern and comparable preconfigured IP-addresses|UDP-port combinations IP_x|p_y).

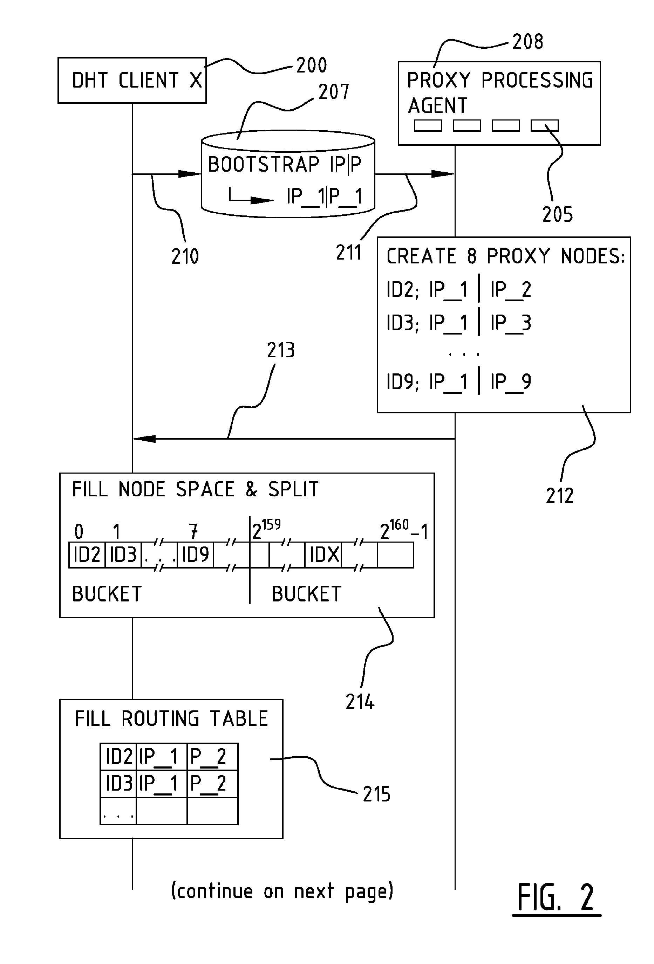

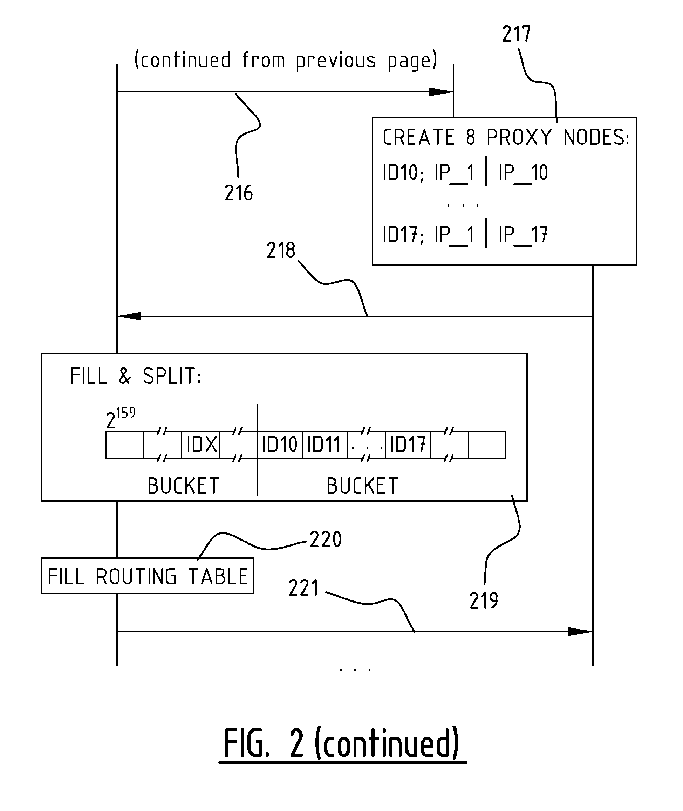

Now a more detailed embodiment of the system and method of the invention will be explained with reference to figure 2. According to this embodiment the proxy processing agent will generate the node identifiers (nodeIDs) of the proxy nodes in such a way that it is guaranteed that a sufficient number of "buckets" in the routing table of the DHT client node are fully filled. In the given example the pattern depends on the own nodeID of requesting DHT node 200, which it announces in the DHT find-node request messages. This pattern is different for each DHT node 200 but deterministic with respect to the own nodeID IDX of the DHT node 200. Referring to figure 2, DHT client 200 with nodeID IDX sends an initial DHT find-node request message 210 to a bootstrap server 106 via router 207, where this DHT find-node request message is deflected, towards a proxy node with IP address IP_1 and UDP port P_1 and received at the proxy processing agent 208, see arrow 211. Note that for convenience, the port numbers are numbered starting from number 1, where in practice the numbering will start from number 2048. In response to this DHT find-node request message, in step 212, the agent 208 creates eight proxy nodes with nodeIDs ID2-ID9. Those nodeIDs are generated using the following pattern: split the entire node-space (here a node-space with values going from 0 to 2¹⁶⁰ - 1) in two equally sized "buckets"; and compute eight appropriate nodeIDs in the bucket in which the own nodeID IDX does not reside. In the present example it is assumed that IDX is in the second bucket, see also step 214, and ID2-ID9 are given the values 0-7. In step 213 a DHT response message is sent from the agent 208 to the DHT client 200 containing the nodeIDs with the values 0-7 and the associated IP address|UDP port combinations. In step 214 the DHT client 200 fills it node space with ID2-9 and splits its node-space in two buckets. Since the first bucket contains eight nodeIDs it is considered to be full. In step 215 the routing table is filled with nodeIDs ID2-9 and the associated IP|UDP combinations. Note that steps 213 and 214 may be performed by a DHT client of the prior art. However, the generating of the eight proxy nodes at the agent side and the way the nodeIDs are chosen at the agent side is unique for this embodiment of the invention.

In a next step the client node 200 will send further DHT find-node request messages to the nodes ID2-9. A first such further DHT find-node request message is sent in step 216 to the proxy node with IP address IP_1 and UDP port P_2. In response to this DHT find-node request message eight further proxy nodes are generated with nodeIDs ID10-17 and associated IP|UDP combinations, see step 217. Those nodeIDs are generated using the following pattern which is similar to the pattern used in step 212: split the bucket in which IDX resides further in two equally sized (smaller) "buckets", see also step 219, and choose eight appropriate nodeIDs ID10-17 in the bucket in which IDX does not reside. In the present example it is assumed that IDX is in the first (smaller) bucket and ID10-17 are given the values 3.2¹⁵⁸ to 3.2¹⁵⁸ + 7.

Next further DHT request messages 221 may be sent until the routing table is completely filled - this is filled with 1280 entries for the example of a nodespace with size 2¹⁶⁰ - or sufficiently filled, depending on the behaviour of the client node. If it is possible/desirable to completely fill the routing table then steps 216-220 are repeated until the bucket size is 8 (in which case it cannot be split further) and the last bucket is filled with eight appropriate nodeIDs.

The skilled person will understand that this particular way of filling is only one possible pattern that may be used in embodiments of the invention and that many other patterns may be used, which pattern could possibly be made dependent on other parameters relevant for the DHT process. In the example of figure 2, the first eight spaces of a bucket to be filled are chosen, but the skilled person will understand that it is also possible to choose other spaces in the bucket to be filled and to spread the node identifiers e.g. uniformly over the bucket to be filled.

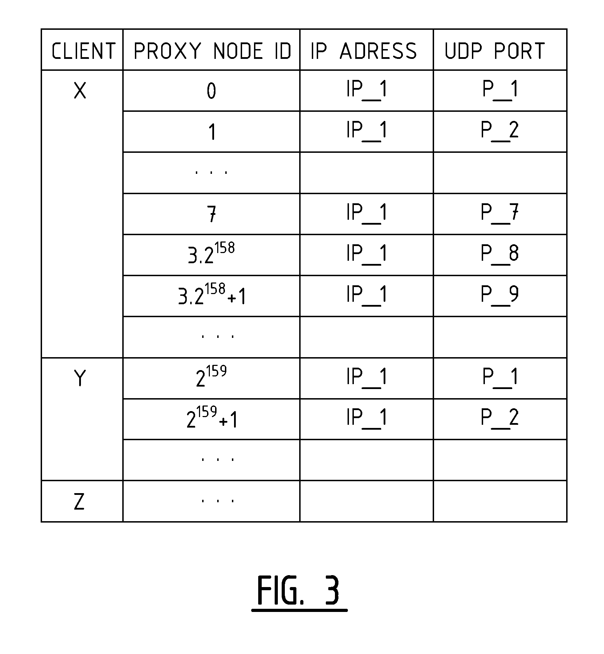

Figure 3 illustrates an embodiment of a database which is maintained in the proxy processing agent. For client X the values correspond with the example of figure 2. For client Y it is assumed that its nodeID is in the first half of the nodespace, so that the first group of generated nodeIDs following the pattern of the example of figure 2 are 2¹⁵⁹ to 2¹⁵⁹ + 7.

The DHT node 100, 200 may launch successive DHT request messages, such as DHT ping request messages or repeated DHT find-node request messages, to the individual proxy nodes 105, 205 of which it has become aware to verify whether they are still alive. Usually, as long as those proxy nodes respond, the DHT node 100, 200 keeps the proxy nodes 105, 205 in its DHT Routing Table. This will typically depend on the BitTorrent client implementation. A proxy node 105, 205 will answer to such a DHT request message of the DHT node 100, 200 with the same nodeID that in the earlier DHT find-node response message to that DHT node 100, 200 has been associated with that proxy node 105, 205. This is possible thanks to the database that is maintained in the proxy processing agent, where for each client the generated nodeIDs and associated address|port combinations are stored. Note that since the data is stored coupled to a client identifier, it is possible to use the same address|port combinations for different clients.

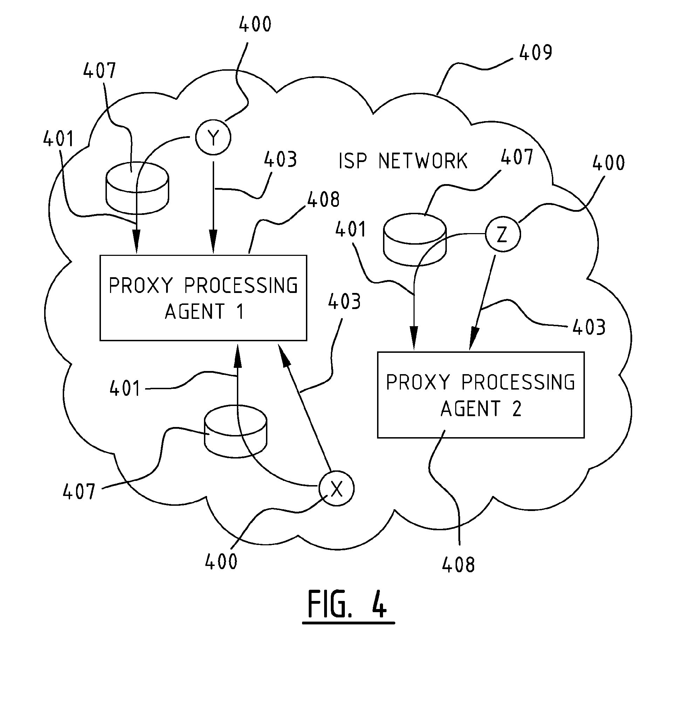

Figure 4 illustrates a further embodiment of the system of the invention which is particularly useful for use in large ISP networks. Here two proxy processing agent 408 are provided in one ISP network 409. A router 407 is adapted to deflect an incoming packet addressed to a bootstrap server towards one of the proxy nodes of proxy processing agents 408 depending on the source of the packet. In the example of figure 4, the messages 401 of DHT client nodes X and Y addressed to a bootstrap server are deflected to proxy processing agent 1, and the messages 401 of DHT client node Z are deflected to proxy processing agent 2. Further DHT request messages 403 will then also be sent to the proxy nodes of the respective agents 408. The skilled person will understand that other variants with more then two agents also fall within the scope of the present invention.

Embodiments of the invention introduce a certain centralisation in the otherwise completely distributed DHT network. This centralisation can be exploited to make at least part of the DHT network behave in a way that is better tailored to the ISP's needs, without jeopardizing the end-users' experience of BitTorrent file exchange.

Further embodiments of the invention have the advantage that a modification to the DHT clients in the market is not required. However, note that a DHT client in the market using the invention may be recognised from the information stored in its DHT routing table. In embodiments of the invention, the DHT Routing table will typically be sufficiently filled. Also, typically the entries in the DHT Routing Table will follow a specific pattern as opposed to being random in the prior art.

While the principles of the invention have been set out above in connection with specific embodiments, it is to be clearly understood that this description is merely made by way of example and not as a limitation of the scope of protection which is determined by the appended claims.

## Claims

1. Processing method for replying to a distributed hash table (DHT) message from a DHT client in order to allow the DHT client to fill his DHT routing table, comprising the following steps performed at a proxy processing agent having a plurality of nodes:
receiving from the DHT client a DHT request message;
generating at least one node identifier and associating each node identifier with an IP address and a port number, each IP address/port number combination corresponding with a node of said plurality of nodes;
sending a DHT response message containing said at least one node identifier and associated IP address and port to the DHT client;
storing in connection with said DHT client the at least one generated node identifier and associated IP address and port.

2. Processing method of claim 1,
wherein said receiving consists in receiving from the DHT client a first DHT request message addressed to a bootstrap server and deflected by a router to the proxy processing agent; and said generating consists in generating a first group of first node identifiers for filling a first bucket of a node space; and/or
wherein said receiving consists in receiving from the DHT client a further DHT request message addressed to an IP address/port associated with said first group of first node identifiers; and said generating consists in generating a further group of further node identifiers for filling a further bucket of the node space.

3. Processing method of claim 1, wherein the DHT request message is a message for which the associated DHT response message includes at least one node, and is preferably any one of the following: a DHT find-node, a DHT ping, a DHT get-peers, or a DHT announce request message.

4. Processing method of claim 1, said DHT client having a node identifier and the DHT request message containing said node identifier, wherein the at least one node identifier is generated according to a predetermined pattern taking into account the node identifier of the DHT client node.

5. Processing method of claim 4 for allowing the DHT client to fill his DHT routing table by putting received node identifiers in consecutive buckets of a node space, wherein for every received DHT request message a plurality of node identifiers are generated at the proxy processing agent and wherein the pattern is such that every node identifier of said plurality of generated node identifiers is in the same bucket and that the node identifier of the DHT client does not reside in said bucket.

6. Processing method of claim 1, further comprising at the proxy processing agent:
receiving at a node of said plurality of nodes of the proxy processing agent a further DHT request message, such as a ping or repeated DHT find-node request message, from the DHT client;
looking up the stored node identifier associated with said node for said DHT client;
sending a DHT response message containing said looked up stored node identifier.

7. Proxy processing agent for replying to a distributed hash table (DHT) message from a DHT client in order to allow the DHT client to fill his DHT routing table, comprising:
a plurality of nodes for receiving from the DHT client a DHT request message;
processing means for generating at least one node identifier and for associating with each node identifier an IP address and a port number, each IP address/port number combination corresponding with a node of said plurality of nodes;
means for composing and sending in reply to said DHT request message a DHT response message to the DHT client, said DHT response message containing said at least one node identifier and associated IP address and port;
storage means for storing in connection with said DHT client the at least one generated node identifier and associated IP address and port.

8. Proxy processing agent of claim 7, wherein the DHT message contains the node identifier of the DHT client; and wherein said processing means is adapted to generate said at least one node identifier according to a predetermined pattern taking into account the node identifier of the DHT client.

9. System for filling a routing table of a distributed hash table (DHT) client node in a DHT infrastructure comprising a DHT bootstrap server, said system comprising:
- a proxy processing agent according to claim 7 or 8;
- at least one router adapted to deflect a packet addressed to a bootstrap server towards said proxy processing agent.

10. Router for use in a network of a DHT client node for use in a method for filling a routing table of said DHT client node in a DHT infrastructure comprising a DHT bootstrap server, said network having a proxy processing agent with a plurality of proxy nodes, wherein said router is adapted to deflect a packet addressed to the DHT bootstrap server towards a first node of said plurality of proxy nodes of said proxy processing agent.

11. Router of claim 10, wherein said router contains a policy rule indicating that a packet directed to a particular IP address/UDP port associated with the DHT bootstrap server should be routed instead to a first IP address/UDP port associated with the first node of said plurality of proxy nodes.

12. Method for filling a routing table of a distributed hash table (DHT) client node in a DHT infrastructure, said DHT infrastructure comprising a DHT bootstrap server, a proxy processing agent, and at least one router adapted to deflect a packet addressed to the DHT bootstrap server to the proxy processing agent, wherein the following steps are performed at the DHT client node:
- sending through a router of said at least one router a DHT request message addressed to a bootstrap server;
- receiving in reply to said DHT request message from said proxy processing agent a DHT response message containing a group of nodes comprising for each node a node identifier and associated IP address and port, said group being created and managed at the proxy processing agent, preferably according to a predetermined pattern;
- storing said group of node identifiers and associated IP addresses and ports in the routing table.

13. Method of claim 12, further comprising sending a further DHT request message to at least one node of said group; and receiving from said at least one node at least one further group of nodes comprising for each node a node identifier and associated IP address and port, said further group being created and managed at the proxy processing agent, preferably according to a predetermined pattern; and storing said further group of node identifiers and associated IP addresses and ports in said routing table, optionally repeating said sending and receiving step for at least one node of the further group of nodes.

14. DHT client node having storage means storing a routing table, wherein said routing table contains a group of node identifiers obtained according to the method of the claim 1.

15. Computer program for use in the method of claim 4, for generating for every received DHT request message a plurality of node identifiers using a pattern which is such that every node identifier of said plurality of generated node identifiers is in the same bucket and that the node identifier of the DHT client does not reside in said bucket.
